(19) Europäisches Patentamt
European Patent Office
Office européen des brevets

(11) **EP 4 129 584 A1**

(12) **EUROPEAN PATENT APPLICATION**
published in accordance with Art. 153(4) EPC

(43) Date of publication:
**08.02.2023 Bulletin 2023/06**

(21) Application number: **21781057.1**

(22) Date of filing: **24.03.2021**

(51) International Patent Classification (IPC):
**B25J 13/08** (1985.01)      **B25J 19/04** (1985.01)

(52) Cooperative Patent Classification (CPC):
**B25J 13/08; B25J 19/04**

(86) International application number:
**PCT/JP2021/012177**

(87) International publication number:
**WO 2021/200438 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020   JP 2020064455**

(71) Applicant: **Minebea Mitsumi Inc.**
**Kitasaku-gun, Nagano 3890293 (JP)**

(72) Inventor: **NAKANO, Yoshihiro**
**Kitasaku-gun, Nagano 389-0293 (JP)**

(74) Representative: **Westphal, Petra**
**Einsel Attorney at Law und**
**Rechtsanwälte PartmbB**
**Große Bäckerstraße 3**
**20095 Hamburg (DE)**

(54) **CALIBRATION SYSTEM, INFORMATION PROCESSING SYSTEM, ROBOT CONTROL SYSTEM, CALIBRATION METHOD, INFORMATION PROCESSING METHOD, ROBOT CONTROL METHOD, CALIBRATION PROGRAM, INFORMATION PROCESSING PROGRAM, CALIBRATION DEVICE, INFORMATION PROCESSING DEVICE, AND ROBOT CONTROL DEVICE**

(57)    A calibration device according to one aspect of the present invention generates first coordinate information, in a calibration system comprising a robot arm which includes, at a distal end, a grasping unit for gasping an object to be grasped, an imaging device, and the calibration device, on the basis of a learning model generated through machine learning of a plurality of pieces of teaching data each including an image of a captured virtual space containing a 3D model relating to the grasping unit and information indicating a position of the grasping unit contained in the virtual space and a captured image of the grasping unit captured from a predetermined direction, the first coordinate information indicating a position of the grasping unit in a captured-image coordinate system having the captured image as a reference. The calibration device carries out, on the basis of coordinate conversion information used for coordinate conversion processing of executing coordinate conversion of the first coordinate information to second coordinate information indicating a position of the grasping unit in a robot coordinate system having the robot arm as a reference, the coordinate conversion of the first coordinate information to the second coordinate information.

FIG. 1

**Description**

Technical Field

The present invention relates to a calibration system, an information processing system, a robot control system, a calibration method, an information processing method, a robot control method, a calibration program, an information processing program, a calibration apparatus, an information processing apparatus, and a robot control apparatus.

Background Art

In order to hold a plurality of randomly stacked objects (workpieces) with a robot arm or the like, a technique of recognizing the three-dimensional position of the robot arm is known. In this case, there is known a technique using supervised data including an image obtained by capturing the robot arm to generate a learning model for estimating the position of the robot arm based on the image. In adjusting the positional relationship between the robot arm and a camera, a marker such as a two dimensional code or a color pattern to be recognized by the camera may be attached to the robot arm so that the marker is detected by the camera. In this case, the position of the marker detected by image capturing with the camera is used as supervised data in learning processing.

Citation List

Patent Literature

Patent Document 1: JP 2018-144152 A

Patent Document 2: JP 2019-171540 A

Summary of Invention

Technical Problem

However, since it is difficult to attach a marker at a position of a holding portion being a fingertip of the robot arm to be detected, it may be unable to accurately adjust the positional relationship. In order to accurately adjust the positional relationship, for example, an operation such as replacing the holding portion of the robot arm with a dedicated jig is required.
With the above-described problem as an example, an object of the present invention is to provide a calibration system, an information processing system, a robot control system, a calibration method, an information processing method, a robot control method, a calibration program, an information processing program, a calibration apparatus, an information processing apparatus, and a robot control apparatus capable of easily adjusting the positional relationship between a robot arm and a camera.

Solution to Problem

A calibration system according to an aspect of the present invention includes a robot arm, an image capturing apparatus, and a calibration apparatus. The robot arm includes, at the tip, a holding portion for holding an object to be held. The image capturing apparatus generates at least one captured image by capturing an image of the robot arm from a predetermined direction. The calibration apparatus includes a first coordinate generation unit, a second coordinate generation unit, and a conversion unit. The first coordinate generation unit generates first coordinate information based on a learning model generated by performing machine learning on plural pieces of supervised data and a captured image obtained by image capturing the robot arm from a predetermined direction, the supervised data including a captured image of a virtual space containing a three-dimensional model related to the robot arm and information indicating a position of the holding portion of the robot arm contained in the virtual space, the first coordinate information indicating a position of the holding portion in a captured image coordinate system with respect to the captured image. The conversion unit coordinate-converts first coordinate information into second coordinate information, based on coordinate conversion information used for coordinate conversion processing of coordinate-converting the first coordinate information into the second coordinate information and the first coordinate information, the second coordinate information indicating the position of the holding portion in a robot coordinate system with respect to the robot arm.

Advantageous Effects of Invention

According to an aspect of the present invention, the positional relationship between the robot arm and a camera can be easily adjusted.

Brief Description of Drawings

FIG. 1 is a diagram illustrating an example of a calibration system according to a first embodiment.
FIG. 2 is a diagram illustrating an example of the relationship between a robot coordinate system and a camera coordinate system.
FIG. 3 is a block diagram illustrating an example of a configuration of the calibration system according to the first embodiment.
FIG. 4 is a diagram illustrating an example of a three-dimensional model of a holding portion.
FIG. 5 is a diagram illustrating an example of a captured image of a virtual space with the three-dimensional model of the holding portion arranged.
FIG. 6 is a flowchart illustrating an example of learning processing according to the first embodiment.
FIG. 7 is a flowchart illustrating an example of calibration processing according to the first embodiment.
FIG. 8 is a block diagram illustrating an example of a configuration of a calibration system according to a second embodiment.
FIG. 9 is a flowchart illustrating an example of calibration processing according to the second embodiment.

Description of Embodiments

In the following, a calibration system, an information processing system, a robot control system, a calibration method, an information processing method, a robot control method, a calibration program, an information processing program, a calibration apparatus, an information processing apparatus, and a robot control apparatus according to embodiments will be described with reference to the drawings. Note that the present invention is not limited to the embodiment described above. Further, the dimensional relationships between elements, proportions of the elements, and the like in the drawings may differ from reality. Among the drawings, parts having mutually different dimensional relationships and proportions may be included. Furthermore, the contents described in one embodiment or modification example are applied in principle to other embodiments or modification examples.

First Embodiment

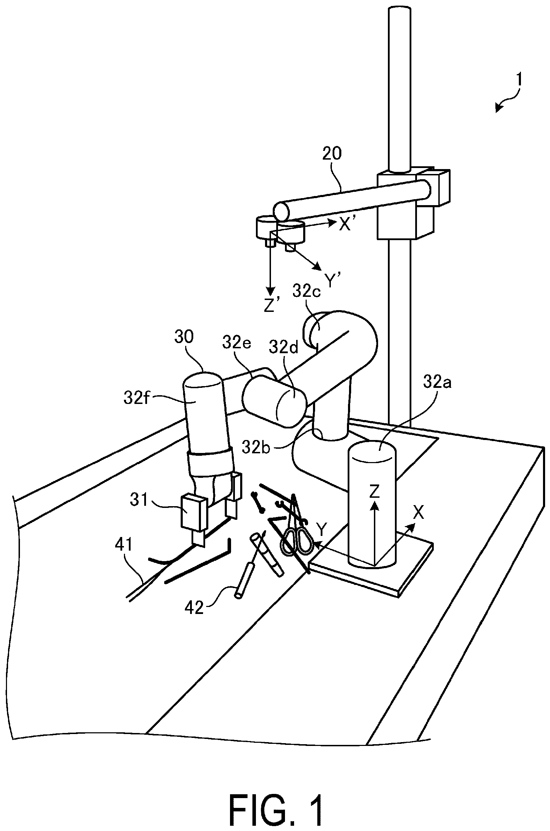

FIG. 1 is a diagram illustrating an example of a calibration system according to a first embodiment. A calibration system 1 illustrated in FIG. 1 includes an image capturing apparatus 20, a robot arm 30, and a calibration apparatus 10 (not illustrated) to be described later. Calibration processing is performed, for example, at a time of installing the image capturing apparatus 20, and at a time of activating the robot arm 30.
The image capturing apparatus 20 captures an image including a holding portion 31 of the robot arm 30, and outputs the image to the calibration apparatus 10. A camera capable of capturing a plurality of images such as a publicly known stereo camera is used for the image capturing apparatus 20 according the first embodiment, for example. The image capturing apparatus 20 is installed at a position, and at the position, both of the holding portion 31 of the robot arm 30 and workpieces 41 and 42 can be captured. As will be described later, the image capturing apparatus 20 captures an image of a work area including the holding portion 31 of the robot arm 30 a predetermined number of times (n times) when the calibration processing is executed. Note that according to the first embodiment, it is assumed that distortion and luminance normalization of an individual lens of the image capturing apparatus 20, parallelization among a plurality of lenses (stereo set) included in the image capturing apparatus 20, and the like have already been calibrated.
The calibration apparatus 10 estimates the position of the robot arm 30 and the like using the image output from the image capturing apparatus 20. The calibration apparatus 10 generates a coordinate conversion matrix D to be described later based on a coordinate system in n images output from the image capturing apparatus 20 and a coordinate system with respect to a joint angle of the robot arm 30, for example, in the calibration processing. The calibration apparatus 10 coordinate-converts the coordinate system in the images output from the image capturing apparatus 20 into the coordinate system with respect to the joint angle of the robot arm 30, for example, by using the generated coordinate conversion matrix D. Further, the calibration apparatus 10 outputs a signal for controlling an operation of the robot arm 30 based on coordinate-converted positions of the holding portion 31 of the robot arm 30, the workpieces 41 and 42, and the like.

The robot arm 30 includes the holding portion (gripper) 31 for holding an object, and a plurality of joints 32a to 32f for changing the position of the holding portion 31. The robot arm 30 changes the joint angle of the plurality of joints 32a to 32f by a publicly known control method, for example, based on the signal output from the calibration apparatus 10. Accordingly, the robot arm 30 moves the holding portion 31 and performs an operation of holding the workpieces 41 and 42, and the like. For example, as will be described later, the robot arm 30 moves the holding portion 31 before the image capturing apparatus 20 captures an image of the work area in the calibration processing. Note that the workpieces 41 and 42 are examples of the obj ect.

The positions of the robot arm 30 and the holding portion 31 controlled by the calibration apparatus 10, that is, the actual locations of the robot arm 30 and the holding portion 31 are represented by a coordinate system defined by an X-axis, a Y-axis, and a Z-axis illustrated in FIG. 1 (hereinafter may be referred to as a "robot coordinate system V"). Also, the positions of the robot arm 30 and the holding portion 31 captured by the image capturing apparatus 20, that is, the positions of the robot arm 30 and the holding portion 31 on the captured image, are represented by a coordinate system defined by an X'-axis, a Y'-axis, and a Z'-axis illustrated in FIG. 1 (hereinafter may be referred to as a "camera coordinate system V"). The camera coordinate system V' and the robot coordinate system V are, for example, represented by Equation (1) below.

[Math 1]

$$V' = \begin{bmatrix} X' \\ Y' \\ Z' \\ 1 \end{bmatrix} V = \begin{bmatrix} X \\ Y \\ Z \\ 1 \end{bmatrix} \qquad \cdots (1)$$

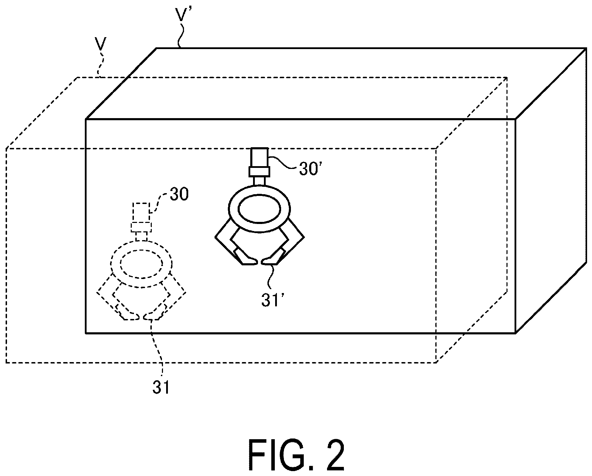

Regarding a positional relationship of the position of the holding portion 31 of the robot arm 30 controlled by the calibration apparatus 10 and the position 31' of the holding portion 31 captured by the image capturing apparatus 20, a difference may occur between the positional relationship by design and the positional relationship in an actually installed state. This positional difference occurs on the basis of, for example, a mechanical error between a design value of a stereo set included in the image capturing apparatus 20 and the actual stereo set, or a deviation from a design value such as a distance between the image capturing apparatus 20 and the robot arm 30 in an actually installed state. FIG. 2 is a diagram illustrating an example of the relationship between the robot coordinate system and the camera coordinate system. As illustrated in FIG. 2, a difference occurs between the position 30' of the robot arm 30 and the position 31' of the holding portion 31 in the camera coordinate system V' shown in solid lines and the positions of the robot arm 30 and the holding portion 31 in the robot coordinate system V shown in dashed lines.

Thus, the camera coordinate system V' is converted into the robot coordinate system V according to Equation (2) below. The coordinate conversion matrix D shown in Equation (2) is, for example, a rotation-translation matrix for coordinate conversion as illustrated in Equation (3). Note that, hereinafter, the coordinate conversion for correcting the difference between the camera coordinate system V' and the robot coordinate system V may be referred to as "calibration".

$$V = DV' \bullet\bullet\bullet (2)$$

[Math 2]

$$D = \begin{bmatrix} R & t \\ 0 & 1 \end{bmatrix} \qquad \cdots (3)$$

Note that, in Equation (3), for example, t is a translation vector with three rows and one column. Also, for example, R is a rotation matrix with three rows and three columns as shown in Equation (4). That is, the coordinate conversion matrix D is represented by a matrix with four rows and four columns. Note that the rotation matrix shown in Equation (4) is an example of a matrix for rotating the camera coordinate system V' about the X-axis.
[Math 3]

$$R = \begin{bmatrix} 1 & 0 & 0 \\ 0 & cos\theta & -sin\theta \\ 0 & sin\theta & cos\theta \end{bmatrix} \qquad \cdots (4)$$

In order to calculate the coordinate conversion matrix D, first, it is necessary to identify the position 31' of the holding portion 31 in the camera coordinate system V' and the position of the holding portion 31 in the robot coordinate system V. The position of the holding portion 31 in the robot coordinate system V is identified by, for example, rotation and translation of a coordinate system of another joint viewed from a coordinate system of each joint. On the other hand, as described above, it is necessary to use a dedicated jig or the like in order to accurately identify the position 31' of the holding portion 31 in the camera coordinate system V'.

Thus, according to the first embodiment, the calibration system 1 estimates the position 31' of the holding portion 31 in the camera coordinate system V' by using a learning model. In this case, according to the first embodiment, supervised data to be used for creating the learning model is acquired by arranging a three-dimensional model of the holding portion 31 of the robot arm 30 on a virtual space and identifying positional information of the three-dimensional model of the holding portion 31 of the robot arm 30 on the virtual space based on an image. According to the first embodiment, a combination of a captured image obtained by capturing the virtual space with the three-dimensional model of the holding portion 31 arranged and the positional information (coordinates) of the three-dimensional model in the captured image is used as the supervised data.

Also, according to the first embodiment, the calibration system 1 converts coordinates V'i indicating the position 31' of the holding portion 31 in the camera coordinate system V' estimated using the learning model based on the image captured for the i-th time into coordinates Vi indicating the position 31' of the holding portion 31 in the robot coordinate system at the time of the i-th image capturing. In this case, for example, the calibration system 1 calculates the coordinates Vi indicating the position of the holding portion 31 in the robot coordinate system at the time of capturing the image corresponding to the coordinates V'i. The coordinates Vi are calculated, for example, based on rotation and translation of a coordinate system of another joint viewed from a coordinate system of each joint of the robot arm 30. Then, the calibration system 1 estimates the coordinate conversion matrix D using, for example, a difference between the coordinates V'i in the camera coordinate system V' and the coordinates Vi in the robot coordinate system V. Note that, hereinafter, rotation and translation of a coordinate system of another joint viewed from a coordinate system of each joint may be referred to as a "joint angle displacement". Also, hereinafter, the coordinates related to the position 31' the holding portion 31 in the camera coordinate system V' may be referred to as "first coordinate information", and the coordinates related to the position of the holding portion 31 in the robot coordinate system V may be referred to as "second coordinate information".

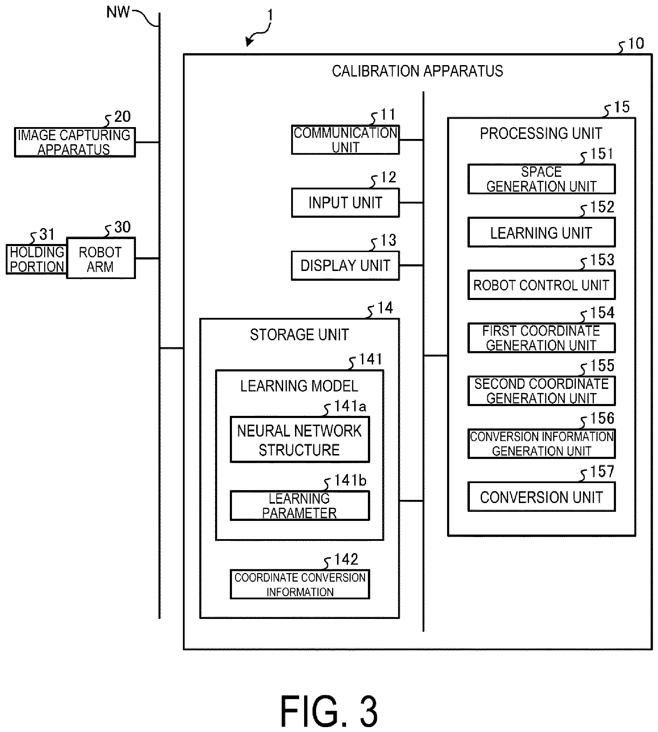

FIG. 3 is a block diagram illustrating an example of a configuration of the calibration system according to the first embodiment. As illustrated in FIG. 3, the calibration apparatus 10 is communicatively connected with the image capturing apparatus 20 and the robot arm 30 via a network NW. In addition, as illustrated in FIG. 3, the calibration apparatus 10 includes a communication unit 11, an input unit 12, a display unit 13, a storage unit 14, and a processing unit 15.

The communication unit 11 controls communication for data input/output with an external apparatus via the network NW. The communication unit 11 is implemented, for example, by a network card, a network adapter, a network interface controller (NIC), and the like, and the communication unit 11 receives data of an image output from the image capturing apparatus 20 and transmits a signal to be output to the robot arm 30.

The input unit 12 is connected to the processing unit 15, and converts an input operation received from an administrator (not illustrated) of the calibration apparatus 10 into an electrical signal and outputs the electrical signal to the processing unit 15. For example, the input unit 12 is a switch, a button, a mouse, a keyboard, a touch panel, or the like. In addition, the input unit 12 may be an interface or the like for connecting an external input apparatus to the calibration apparatus 10.

The display unit 13 is connected to the processing unit 15, and displays various types of information and various types of image data output from the processing unit 15. The display unit 13 is implemented, for example, by a liquid crystal monitor, a cathode ray tube (CRT) monitor, a touch panel, an organic electro luminescence (EL), or the like.

The storage unit 14 is implemented, for example, by a storage device such as a random access memory (RAM) or a magnetic storage device. The storage unit 14 stores various types of programs executed by the processing unit 15. In addition, the storage unit 14 temporarily stores various types of mathematical formulas used when various types of programs are executed by the processing unit 15 and various types of data such as images output from the image capturing apparatus 20. The storage unit 14 stores a learning model 141 and coordinate conversion information 142.

The learning model 141 is used for processing of estimating the position 31' of the holding portion 31 of the robot arm 30 on the camera coordinate system V' based on an image output from the image capturing apparatus 20. The learning model 141 includes, for example, a neural network structure 141a and a learning parameter 141b. The neural network structure 141a is a network structure applying a publicly known network such as a convolutional neural network, for example. The learning parameter 141b is a weight of a convolutional filter of a convolutional neural network, and is a parameter learned and optimized for estimation of the position 3 1' of the holding portion 31 of the robot arm in the camera coordinate system V'.

The learning model 141 is generated by learning using the above-described combination of a captured image obtained by capturing the virtual space with the three-dimensional model of the holding portion 31 arranged and the positional information (coordinates) of the three-dimensional model in the captured image as the supervised data. The learning model 141 is generated or updated by a learning unit 152 to be described later, for example.

The coordinate conversion information 142 is, for example, the above-described coordinate conversion matrix D used to convert the camera coordinate system V' into the robot coordinate system V. The coordinate conversion information 142 is generated, for example, by a conversion information generation unit 156 to be described later.

The processing unit 15 is implemented by a processor such as a central processing unit (CPU). The processing unit 15 controls the entire calibration apparatus 10. The processing unit 15 executes various types of processing by reading various types of programs stored in the storage unit 14 and executing the read programs. For example, the processing unit 15 includes a space generation unit 151, the learning unit 152, a robot control unit 153, a first coordinate generation unit 154, a second coordinate generation unit 155, the conversion information generation unit 156, and a conversion unit 157.

The space generation unit 151 generates a virtual space containing the three-dimensional model of the holding portion 31 of the robot arm 30. The space generation unit 151 acquires the three-dimensional model of the holding portion 31 of the robot arm 30. The three-dimensional model can be acquired by a method such as publicly known 3D scanning, for example.

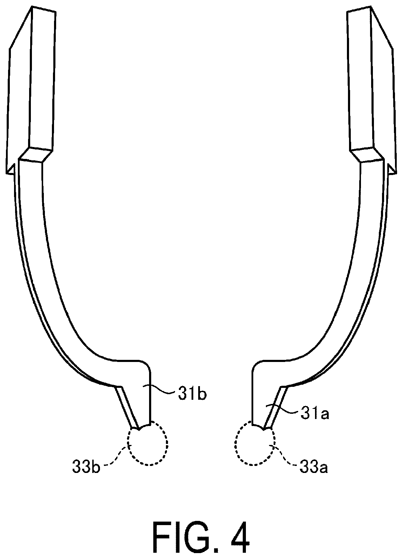

FIG. 4 is a diagram illustrating an example of the three-dimensional model of the holding portion. As illustrated in FIG. 4, in the three-dimensional model of the holding portion 31 of the robot arm 30, for example, a pair of holding portions 31a and 31b are illustrated. Note that markers 33a and 33b shown in dashed lines in FIG. 4 indicate the positions of the holding portions 31a and 31b, and are not illustrated in the virtual space to be described later. Positional information of the markers 33a and 33b is indicated, for example, as metadata added to the generated virtual space.

Next, the space generation unit 151 sets various types of conditions for arranging the three-dimensional model of the holding portion 31 on the virtual space. Conditions such as number of, positions, and orientations of three-dimensional models to be arranged can be set such that image generation software generates an object at random, but the conditions are not limited to this, and the administrator of the calibration apparatus 10 may arbitrarily set the conditions.

Next, the space generation unit 151 arranges the three-dimensional model on the virtual space according to the set conditions. The three-dimensional model can be arranged in the virtual space by using publicly known image generation software or the like, for example. The virtual space with the three-dimensional model arranged will be described in detail later.

In order to secure the number of pieces of supervised data necessary for learning processing, the space generation unit 151 repeats the setting of the conditions for arranging the three-dimensional model and the arrangement of the three-dimensional model in the virtual space after capturing is performed by the learning unit 152 to be described later. In this manner, by acquiring the three-dimensional model and arranging the three-dimensional model on the virtual space, it is possible to more accurately identify the position in the camera coordinate system V' of the holding portion 31 of the robot arm 30 arranged at an arbitrary position on the robot coordinate system V on the virtual space.

Returning to FIG. 3, the learning unit 152 performs the learning processing for generating or updating the learning model 141 using the data of the virtual space with the three-dimensional model of the holding portion 31 of the robot arm 30 arranged. The learning unit 152 acquires an image indicating the position of the arranged three-dimensional model of the holding portion 31 of the robot arm 30, for example, by capturing the virtual space with the three-dimensional model of the holding portion 31 of the robot arm 30 arranged.

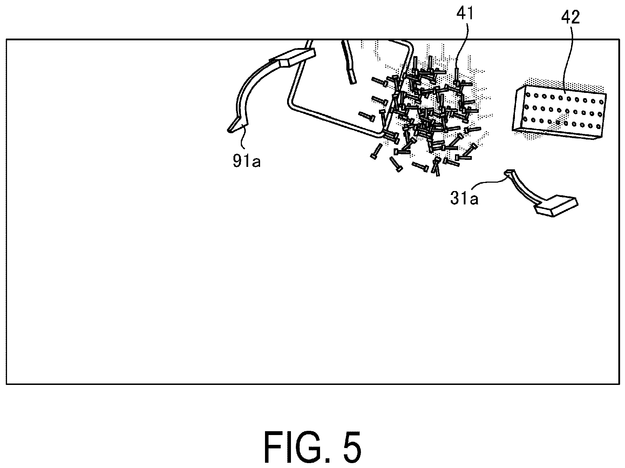

FIG. 5 is a diagram illustrating an example of a captured image of the virtual space with the three-dimensional model of the holding portion arranged. As illustrated in FIG. 5, the three-dimensional model of the holding portion 31 of the robot arm 30 is arranged at a position according to the set conditions on the virtual space. In addition, as described above, a combination of a captured image obtained by capturing the virtual space with the three-dimensional model arranged on the virtual space and the positional information (coordinates) of the three-dimensional model in the captured image is used as the supervised data in the learning processing.

Note that, as illustrated in FIG. 5, three-dimensional models of other objects such as the workpieces 41 and 42 and a tray with the workpieces 41 and 42 arranged may be further arranged on the virtual space. Also, like the holding portion 31a and a holding portion 91a illustrated in FIG. 5, three-dimensional models of a plurality of holding portions may be further arranged on the virtual space. In that case, in addition to the positional information of the holding portion 31a, the positional information of the holding portion 91a and the positional information of the workpieces 41 and 42, the tray, and the like are also used as part of the supervised data.

Note that, in the virtual space, the three-dimensional models of the plurality of holding portions are arranged, for example, in right-and-left pairs similarly to the three-dimensional models of the holding portions 31a and 31b illustrated in FIG. 4, but this is not a limitation. For example, only one three-dimensional model of the holding portion (only the holding portion 31a) may be arranged. For example, the three-dimensional models of the holding portions may be arranged in sets of three or may be arranged in sets of four or more. For example, the three-dimensional model of a plurality of holding portions 31a and 91a may be arranged at random positions in the virtual space as illustrated in FIG.

5. Further, the number of the three-dimensional models of the holding portions arranged on the virtual space is not limited to one or two, and may be three or more.

According to the first embodiment, the position of the three-dimensional model of the holding portion 31 of the robot arm 30 is represented by, for example, three-dimensional coordinates (x, y, z). In addition, the learning unit 152 associates an acquired image with conditions such as position and orientation of the three-dimensional model of the holding portion 31 of the robot arm 30 to be arranged, and stores the image and the conditions in the storage unit 14.

The learning unit 152 repeats storing of the image and the conditions associated with each other a predetermined number of times in order to secure the number of pieces of supervised data necessary for the learning processing. Then, by performing the learning processing a predetermined number of times using the generated supervised data, the learning unit 152 generates or updates the learning parameter 141b to be used as a weight by the neural network structure 141a.

The robot control unit 153 controls the operations of the robot arm 30 and the holding portion 31. The robot control unit 153 controls the operation of the robot arm 30 by, for example, outputting information indicating a rotation amount of each of the joints 32a to 32f of the robot arm 30 or an opening/closing angle of the holding portion 31.

For example, in performing the calibration processing, the robot control unit 153 rotates each of the joints 32a to 32f of the robot arm 30 by a predetermined amount before the image capturing apparatus 20 captures an image. Accordingly, the robot control unit 153 moves the position of the holding portion 31. After the movement, the image of the holding portion 31 is captured by the image capturing apparatus 20. By repeating the movement and the image capturing of the holding portion 31 n times, n images of the holding portion 31 of the robot arm 30 at different positions and n pieces of information regarding the positions of the holding portion 31 of the robot arm 30 in the robot coordinate system V are acquired.

In addition, when the holding portion 31 performs an operation of holding the workpieces 41 and 42, the robot control unit 153 generates information for controlling the robot arm 30 and output the information to the robot arm 30. At this time, the robot control unit 153 generates the information for controlling the robot arm 30 based on coordinates indicating the position of the holding portion 31 of the robot arm 30, including the workpieces 41 and 42, in the robot coordinate system V converted by the conversion unit 157. Note that the robot control unit 153 may be configured to move the position of a plurality (p pieces) of holding portions 31, for example.

The first coordinate generation unit 154 generates first coordinate information being coordinate information in the camera coordinate system V', using an image including the holding portion 31 captured by the image capturing apparatus 20 and the learning model. For example, the first coordinate generation unit 154 acquires n images captured by the image capturing apparatus 20 via the communication unit 11. The first coordinate generation unit 154 generates n pieces of first coordinate information $V'_1, V'_2, ..., V'_n$ based on the n images acquired. At this time, the first coordinate generation unit 154 may measure a distance from the image capturing apparatus 20 in the camera coordinate system V', for example, based on the parallax between left and right images captured by the image capturing apparatus 20. Note that, for example, when the robot control unit 153 moves the position of a plurality of holding portions 31 and thus one image captured by the image capturing apparatus 20 includes the plurality of holding portions 31, the first coordinate generation unit 154 generates plural pieces of first coordinate information $V'_n$ with respect to this one image. For example, based on n images including p holding portions 31, the first coordinate generation unit 154 generates n x p pieces of first coordinate information $V'_{np}$.

The second coordinate generation unit 155 generates second coordinate information, for example, by combining robot joint angles as shown in Equation (5). $^0Q_m$ in Equation (5) is the second coordinate information V. In Equation (5), j represents an order of a joint from the joint 32a to the holding portion 31. Thus, in Equation (5), m represents the number of the joints included in the robot arm 30 plus 1 (a position to be obtained). The position to be obtained is, for example, the position of the tip of the holding portion 31. In Equation (5), 0 represents the origin of the robot coordinate system. For example, $^0Q_1$ represents a displacement of the first joint (joint 32a) as viewed from the origin of the robot coordinate system. For example, $^{j-1}Q_j$ represents the displacement of the j-th joint as viewed from the robot coordinate system of the (j - 1)-th joint. For example, $^{m-1}Q_m$ represents displacements to the tip of the holding portion 31 as viewed from the robot coordinate system of the (m - 1)-th joint. For example, in generating the second coordinate information $V_{n1}, V_{n2} ..., V_{np}$ of the robot arm 30 including six joints 32a to 32f and p holding portions 31 as illustrated in FIG. 1, m = 7 (number of joints + 1 (each holding portion)) and j is an integer in a range of $0 < j \leq m$.

[Math 4]

$$^0Q_m = \ ^0Q_1 \ ^1Q_2 \ ^2Q_3 ... \ ^{j-1}Q_j ... \ ^{m-1}Q_m \qquad \cdots (5)$$

In Equation (6), a coordinate conversion matrix $^{j-1}Q_j$ indicating a displacement of an individual joint is represented by Equation (6) below, for example. In Equation (6), similarly to Equation (3), for example, t is a translation vector with three rows and one column, and R is a rotation matrix with three rows and three columns. That is, the coordinate conversion matrix $^{j-1}Q_j$ of an individual joint is also represented by a matrix with four rows and four columns. Note that, in Equation (6), t represents a position of a joint, R is rotation of a joint.

[Math 5]

$$^{j-1}Q_j = \begin{bmatrix} ^{j-1}R_j & ^{j-1}t_j \\ 0 & 1 \end{bmatrix} \qquad \cdots (6)$$

For example, the second coordinate generation unit 155 generates n pieces of second coordinate information $V_i$, $V_2$, ..., $V_n$ of the holding portion 31 of the robot arm 30 in the robot coordinate system V at the point in time of capturing the n images used for generating n pieces of first coordinate information $V'_1$, $V'_2$, ..., $V'_n$. Note that, for example, when the robot control unit 153 moves the position of a plurality of holding portions 31, the second coordinate generation unit 155 generates plural pieces of second coordinate information $V_n$. For example, based on n images including p holding portions 31, the second coordinate generation unit 155 generates n x p pieces of second coordinate information $V_{np}$.

For example, in Equation (7), the conversion information generation unit 156 estimates or updates the coordinate conversion matrix D minimizing an error E by using an approximation means or the like. In Equation (7), $X_i$ represents an X component of the second coordinate information, and $X(D, X'_i)$ represents an X component of a multiplication result of the coordinate conversion matrix D and the first coordinate information. Similarly, $Y_i$ represents a Y component of the second coordinate information, and $Y(D, Y'_i)$ represents a Y component of a multiplication result of the coordinate conversion matrix D and the first coordinate information. Also, $Z_i$ represents a Z component of the second coordinate information, and $Z(D, Z'_i)$ represents a Z component of a multiplication result of the coordinate conversion matrix D and the first coordinate information. That is, the conversion information generation unit 156 estimates the coordinate conversion matrix D minimizing the error E between the n pieces of first coordinate information $V'_n$ and the n pieces of second coordinate information $V_n$ by Equation (7). As an approximation means, for example, a known numerical analysis method such as Newton's method, a gradient effect method, the LM method, and a least square method is used. Note that, in estimating the coordinate conversion matrix D, it is desirable to set an initial value of the coordinate conversion matrix D as small as possible.

[Math 6]

$$E = \sum_{i=1}^{n} \left(X_i - X(D, X'_i)\right)^2 + \left(Y_i - Y(D, Y'_i)\right)^2 + \left(Z_i - Z(D, Z'_i)\right)^2 \qquad \cdots (7)$$

The conversion unit 157 converts first coordinate information into second coordinate information. For example, the conversion unit 157 converts the first coordinate information V' into the second coordinate information V by Equation (2) using the coordinate conversion matrix D generated by the conversion information generation unit 156.

Processing Flow

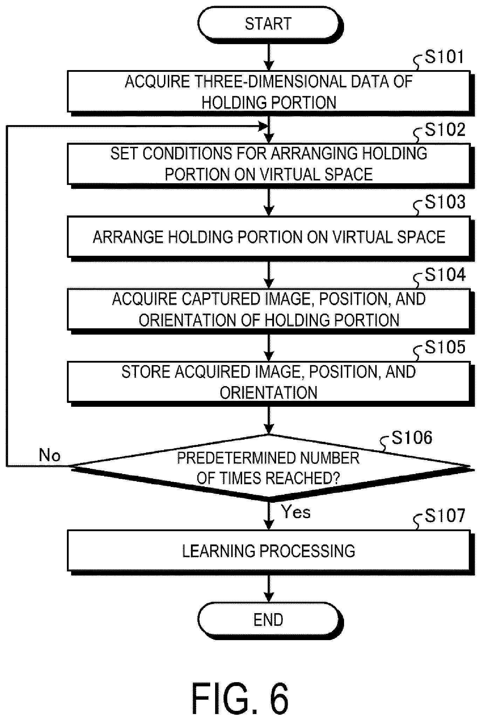

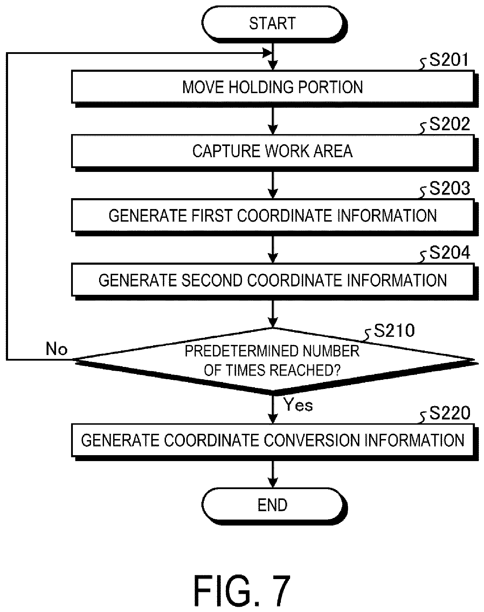

Next, the learning processing and the calibration processing according to the first embodiment will be described with reference to FIGS. 6 and 7. FIG. 6 is a flowchart illustrating an example of the learning processing according to the first embodiment. As illustrated in FIG. 6, the space generation unit 151 acquires the three-dimensional model of the holding portion 31 of the robot arm 30 (step S101). Next, the space generation unit 151 sets the position, the orientation, and the like of the three-dimensional model of the holding portion 31 as conditions for arranging the holding portion 31 of the robot arm 30 (step S102) acquired in the three-dimensional model. Then, the space generation unit 151 arranges, on a virtual space, at least one holding portion 31 of the robot arm 30 with the position and the orientation determined (step S103).

Next, the learning unit 152 acquires a captured image, the position, and the orientation of the holding portion 31 of the robot arm 30, for example, by capturing the virtual space with the three-dimensional model of the holding portion 31 of the robot arm 30 arranged (step S104). Next, the learning unit 152 stores a combination of the acquired image, the position and the orientation of the arranged holding portion 31 as supervised data in the storage unit 14 (step S105). Further, the learning unit 152 repeats step S 102 to step S105 a predetermined number of times (step S106: No). By repeating the processing from step S102 to step S105 the predetermined number of times, a sufficient number of supervised data for repeating the learning processing is generated.

When the number of repeats of step S102 to step S105 is determined to have reached the predetermined number of times (step S106: Yes), the learning unit 152 performs the learning processing using the generated supervised data (step S107). Accordingly, the learning model 141 is generated or updated.

Next, calibration processing in the calibration system 1 will be described. FIG. 7 is a flowchart illustrating an example of the calibration processing according to the first embodiment. As illustrated in FIG. 7, first, the robot control unit 153 moves the holding portion 31 of the robot arm 30 to a predetermined position (step S201). Next, the image capturing apparatus 20 captures an image of a work area including the holding portion 31, and outputs the image to the calibration apparatus 10 (step S202).

Next, the first coordinate generation unit 154 generates the first coordinate information $V'_n$ indicating the position 31' and the orientation of the holding portion 31 on the camera coordinate system V' based on the image including the holding portion 31 acquired from the image capturing apparatus 20 by using the learning model (step S203). Also, the second coordinate generation unit 155 calculates the second coordinate information $V1_n$ indicating the position and the orientation of the holding portion 31 of the robot arm 30 in the robot coordinate system V, based on each joint angle displacement of the robot arm 30 (step S204).

The conversion information generation unit 156 determines whether step S201 to step S204 have been repeated a predetermined number of times (step S210). When it is determined that the predetermined number of times has not been reached (step S210: No). The processing returns to step S201, and the processing is repeated.

When the number of repeats of step S201 to step S204 is determined to have reached the predetermined number of times (step S210: Yes), the conversion information generation unit 156 generates or updates the coordinate conversion matrix D using the first conversion information and the second conversion information (step S220).

As described above, the calibration system 1 according to the first embodiment includes a robot arm, an image capturing apparatus, and a calibration apparatus. The robot arm includes, at the tip, a holding portion for holding an object to be held. The image capturing apparatus generates at least one captured image by capturing an image of the robot arm from a predetermined direction. The calibration apparatus includes a first coordinate generation unit and a conversion unit. The first coordinate generation unit generates first coordinate information based on a learning model generated by performing machine learning on plural pieces of supervised data and a captured image obtained by image capturing the robot arm from a predetermined direction, the supervised data including a captured image of a virtual space containing a three-dimensional model related to the robot arm and information indicating the position of the holding portion of the robot arm contained in the virtual space, the first coordinate information indicating the position of the holding portion in a captured image coordinate system with respect to the captured image. The conversion unit coordinate-converts first coordinate information into second coordinate information, based on coordinate conversion information used for coordinate conversion processing of coordinate-converting the first coordinate information into the second coordinate information and the first coordinate information, the second coordinate information indicating the position of the holding portion in a robot coordinate system with respect to the robot arm. Accordingly, the positional relationship between the robot arm and a camera can be easily adjusted. Also, the calibration processing by the calibration system 1 according to the first embodiment can also be applied in other calibration systems having an equivalent configuration.

Second Embodiment

In the first embodiment, a configuration has been described, and in the configuration, the calibration system 1 calculates a position of the robot arm 30 in the robot coordinate system V by combining respective joint angle displacements of the robot arm 30. However, due to a manufacturing error of the robot arm 30, an initialization misalignment at the time of powering-on, or the like, a position of the robot arm 30 in the robot coordinate system V when the robot arm 30 is operated may deviate from a position of the robot arm 30 based on a design value. In the second embodiment, a configuration will be described, and in the configuration, coordinate conversion information is calculated also in consideration of errors in a rotation angle and a translation position of the robot arm 30. Note that, in the following, parts identical to those illustrated in the drawings described previously are designated by the same reference numerals, and duplicate description will be omitted.

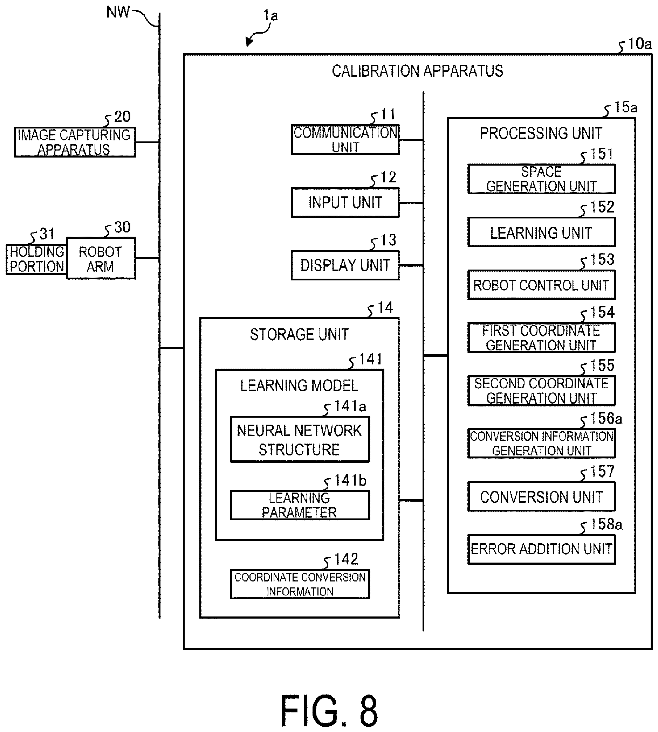

FIG. 8 is a block diagram illustrating an example of a configuration of a calibration system according to the second embodiment. As illustrated in FIG. 8, a calibration system 1a according to the second embodiment includes a calibration apparatus 10a instead of the calibration apparatus 10 according to the first embodiment. The processing unit 15a of the calibration apparatus 10a includes a conversion information generation unit 156a instead of the conversion information generation unit 156 according to the first embodiment. The processing unit 15a further includes an error addition unit 158a.

The error addition unit 158a adds an error to the second coordinate information $V_n$ generated by the second coordinate generation unit 155 to generate an error-added second coordinate information $V''_n$. The error addition unit 158a resolves the second coordinate information $V_n$ into a coordinate conversion matrix of each joint as shown in Equation (5). The error addition unit 158a adds an offset $\Delta^{j-1}R_j$ corresponding to the error to a rotation matrix $^{j-1}R_j$ of a resolved individual coordinate conversion matrix $^{j-1}Q_j$. Similarly, the error addition unit 158a adds an offset $\Delta^{j-1}t_j$ corresponding to the error to a translation vector t of the individual coordinate conversion matrix $^{j-1}Q_j$. An individual coordinate conversion matrix $^{j-1}Q''_j$ with the offset added is shown in Equation (8). Note that, in the following, the offsets

$\Delta^{j-1}R_j$ and $\Delta^{j-1}t_j$ may be referred to simply as offsets $\Delta R$ and $\Delta t$.

[Math 7]

$$^{j-1}Q_j'' = \begin{bmatrix} ^{j-1}R_j + \Delta^{j-1}R_j & ^{j-1}t_j + \Delta^{j-1}t_j \\ 0 & 1 \end{bmatrix} \qquad \cdots (8)$$

The error addition unit 158a generates an error-added second coordinate information Q" as shown in Equation (9) by combining the coordinate conversion matrices as shown in Equation (8).

[Math 8]

$$^{0}Q''_m = {}^{0}Q''_1\, {}^{1}Q''_2\, {}^{2}Q''_3 \cdots {}^{j-1}Q''_j \cdots {}^{m-1}Q''_m \qquad \cdots (9)$$

The conversion information generation unit 156a generates conversion information based on the first coordinate information and the error-added second coordinate information. The conversion information generation unit 156a estimates or updates a coordinate conversion matrix D", the offset $\Delta R$, and the offset $\Delta t$ minimizing an error E by using an approximation method or the like in Equation (10), for example. In Equation (10), X"; represents an X component of the error-added second coordinate information, and $X(D'', X'_i)$ represents an X component of a multiplication result of the coordinate conversion matrix D" and the first coordinate information. Similarly, $Y''_i$ represents a Y component of the error-added second coordinate information, and $Y(D'', Y'_i)$ represents a Y component of a multiplication result of the coordinate conversion matrix D" and the first coordinate information. Also, $Z''_i$ represents a Z component of the error-added second coordinate information, and $Z(D'', Z'_i)$ represents a Z component of a multiplication result of the coordinate conversion matrix D" and the first coordinate information. Note that, similarly to the case of estimating the coordinate conversion matrix D alone, initial values of the coordinate conversion matrix D", the offsets $\Delta R$ and $\Delta t$ are preferably as small as possible.

[Math 9]

$$E'' = \sum_{i=1}^{n}\left(X''_i - X(D'', X'_i)\right)^2 + \left(Y''_i - Y(D'', Y'_i)\right)^2 + \left(Z''_i - Z(D'', Z'_i)\right)^2 \qquad \cdots (10)$$

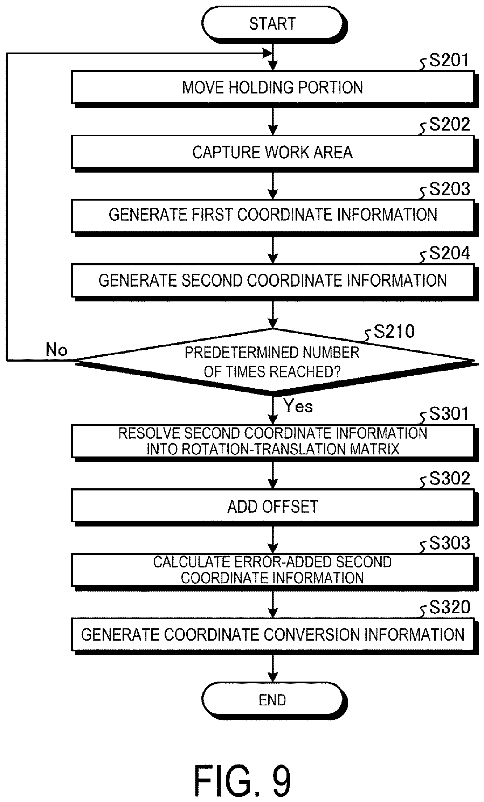

FIG. 9 is a flowchart illustrating an example of a calibration processing according to the second embodiment. Note that the processing in steps S201 to S210 is similar to the calibration processing according to the first embodiment, and thus detailed description is omitted. As illustrated in FIG. 9, when the number of repeats of step S201 to step S204 is determined to have reached a predetermined number of times (step S210: Yes), the error addition unit 158a resolves the second coordinate information into a coordinate conversion matrix for each joint (step S301). Next, the error addition unit 158a adds the offsets $\Delta R$ and $\Delta t$ to a rotation matrix and a translation vector of each of the resolved coordinate conversion matrices, respectively (step S302). Then, the error addition unit 158a calculates an error-added second coordinate information V" by multiplying the coordinate conversion matrices with the offsets $\Delta R$ and $\Delta t$ added (step S303).

Then, the conversion information generation unit 156a generates the coordinate conversion matrix D" as the coordinate conversion information based on the first coordinate information V' and the error-added second coordinate information V" (step S320).

As described above, in the second embodiment, the second coordinate generation unit generates error-added second coordinate information including information regarding errors in a rotation direction, an angle, and a translation position of the joint angle, and the coordinate conversion information generation unit generates coordinate conversion information based on the first coordinate information and the error-added second coordinate information. Accordingly, in generating the coordinate conversion matrix D", it is possible to reflect errors in the rotation direction, an angle, and a translation position derived from the robot arm 30 in addition to an error between the camera coordinate system V' and the robot coordinate system V.

Modification Example

Embodiments of the present invention have been described above, but the present invention is not limited to the embodiments described above, and various modifications are possible without departing from the spirit of the present invention. For example, there may be a configuration, and in the configuration, the learning processing as illustrated in FIG. 6 is performed by another apparatus. That is, the space generation unit 151 and the learning unit 152 illustrated in FIG. 3 may be included in an apparatus other than the calibration apparatus 10 illustrated in FIG. 3. In that case, the calibration apparatus 10 may be configured to acquire the learning model 141 from an external apparatus and store the learning model 141 in the storage unit 14.

Further, there may be a configuration, and in the configuration, robot control processing is performed by another apparatus. That is, the robot control unit 153 illustrated in FIG. 3 may also be included in an apparatus other than the calibration apparatus 10. Furthermore, the calibration system 1 does not have to include the image capturing apparatus 20 and may perform the calibration processing by using an image acquired from an external camera or the like.

Note that, for example, when the robot control unit 153 moves the position of a plurality (p pieces) of holding portions 31, the first coordinate generation unit 154 may be configured to adopt only the holding portion corresponding to a center value among the holding portions 31 detected with respect to one image as the first coordinate information $V'_n$. In that case, for example, the first coordinate generation unit 154 generates n x 1 pieces of first coordinate information $V'_n$ from n images including p holding portions 31.

In addition, the above-described various types of conditions for arranging a three-dimensional model on a virtual space are not limited to the positions and the orientations of the three-dimensional models of the holding portion 31 and the workpieces 41 and 42, and may be, for example, settings of an angle of view or number of pixels of a camera, a baseline of a stereo set, or the like. Also, the various types of conditions may be a range of randomization of the position and the rotation of a camera, a range of randomization of the brightness, the angle, and the position of a light in the virtual space, the positions, the angles, and the numbers of the three-dimensional models of the holding portion 31 and the workpieces 41 and 42 arranged on the virtual space, and the like. Further, the various types of conditions may be the presence or absence of other obstacles such as a tray with the workpieces 41 and 42 arranged on the tray, number of the obstacles, class of the obstacles, and the like. The class is information uniquely identifying an arranged object arranged in the virtual space. Note that the class in the various types of conditions is, for example, a combination of letters, numbers, symbols, and the like. The class may be any information as long as the information does not overlap with other classes. The arranged object is, for example, a three-dimensional model, a workpiece or an obstacle.

Note that while FIG. 1 illustrates a plurality of the workpieces 41 and 42 and the like of different types, the number of types of the workpieces may be one. In addition, the workpieces 41 and 42 and the like are arranged in irregular positions and orientations, but may be arranged in a regular manner. Also, as illustrated in FIG. 1, for example, a plurality of workpieces may be arranged in an overlapping manner in a top view.

Also, the learning model 141 may output angle information indicating an inclination of a gripper in addition to coordinates indicating a position of the gripper. Note that, in the calibration processing, a rotation amount for moving the respective joints 32a to 32f of the robot arm 30 by the robot control unit 153 may be a different amount each time. In addition, an example has been described, and in the example, a convolutional neural network is used for the machine learning processing in generating or optimizing the learning model 141. However, this is not a limitation, and any learning algorithm such as deep learning may be used as long as the above-described output is possible.

Note that, a configuration has been described, and in the configuration, the position and the three-dimensional model of the holding portion 31 of the robot arm 30 are used in the learning processing and the calibration processing. However, there may be a configuration, and in the configuration, the position and the three-dimensional model of a part of the robot arm 30 other than the holding portion 31 may also be used. For example, as various types of conditions for arranging a three-dimensional model on the virtual space, a condition may be set such that the robot arm 30 becomes an obstacle when the holding portion 31 is captured.

Also, the order of the processing steps illustrated in the flowchart may be changed, or the processing steps may be performed simultaneously. For example, in the calibration processing as illustrated in FIGS. 7 and 9, the calibration apparatus 10 may generate the second coordinate information before the first coordinate information, or may generate the first coordinate information and the second coordinate information simultaneously and parallelly. In addition, a configuration has been described, and in the configuration, in the calibration processing, the robot arm 30 moves the holding portion 31 before image capturing is performed by the image capturing apparatus 20. However, embodiments are not limited to this embodiment. For example, there may be a configuration, and in the configuration, image capturing is performed by the image capturing apparatus 20, the first coordinate information and the second coordinate information are generated, and then the robot arm 30 moves the holding portion 31.

Moreover, the present invention is not limited to the embodiment described above. A configuration obtained by appropriately combining the above-mentioned constituent elements is also included in the present invention. Further effects and modification examples can be easily derived by a person skilled in the art. Thus, a wide range of aspects of the present invention are not limited to the embodiment described above and may be modified variously.

Reference Signs List

1 Calibration system
10 Calibration apparatus
20 Image capturing apparatus
30 Robot arm
41, 42 Workpiece

**Claims**

1. A calibration system, comprising:

   a robot arm;
   an image capturing apparatus; and
   a calibration apparatus,
   the robot arm including, at a tip, a holding portion configured to hold an object to be held,
   the image capturing apparatus being configured to generate at least one captured image by capturing an image of the robot arm from a predetermined direction,
   the calibration apparatus including
   a first coordinate generation unit configured to generate first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space, and
   a conversion unit configured to coordinate-convert the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm.

2. The calibration system according to claim 1, further comprising:

   a robot control unit configured to drive the robot arm by a predetermined amount in accordance with the image capturing from the predetermined direction;
   a second coordinate generation unit configured to generate the second coordinate information at a predetermined timing related to the image capturing based on a joint angle of the robot arm; and
   a coordinate conversion information generation unit configured to generate the coordinate conversion information for coordinate-converting the first coordinate information into the second coordinate information based on one or more pieces of the first coordinate information and the second coordinate information generated based on a same number of joint angles of the robot arm as a number of pieces of the first coordinate information.

3. The calibration system according to claim 2, wherein the coordinate conversion information generation unit generates the coordinate conversion information such that a difference between the first coordinate information and the second coordinate information satisfies a predetermined condition.

4. The calibration system according to claim 2 or 3, wherein

   the second coordinate generation unit generates error-added second coordinate information including information regarding errors in a rotation direction and a translation position of the joint angle, and
   the coordinate conversion information generation unit generates the coordinate conversion information based on the first coordinate information and the error-added second coordinate information.

5. An information processing system, comprising:

   a robot arm;
   an image capturing apparatus; and
   a calibration apparatus,

the robot arm including, at a tip, a holding portion configured to hold an object to be held,

the image capturing apparatus being configured to generate at least one captured image by capturing an image of the robot arm from a predetermined direction,

the calibration apparatus including

a first coordinate generation unit configured to generate first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space,

a second coordinate generation unit configured to generate second coordinate information at a predetermined timing related to the image capturing based on a joint angle of the robot arm, and

a coordinate conversion information generation unit configured to generate coordinate conversion information for coordinate-converting the first coordinate information into the second coordinate information based on one or more pieces of the first coordinate information and the second coordinate information generated based on a same number of joint angles of the robot arm as a number of pieces of the first coordinate information.

6. A robot control system, comprising:

a robot arm;
an image capturing apparatus; and
a calibration apparatus,

the robot arm including, at a tip, a holding portion configured to hold an object to be held,

the image capturing apparatus being configured to generate at least one captured image by capturing an image of the robot arm from a predetermined direction,

the calibration apparatus including

a first coordinate generation unit configured to generate first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space,

a conversion unit configured to coordinate-convert the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm, and

a robot control unit configured to drive the robot arm by a predetermined amount in accordance with the image capturing from the predetermined direction.

7. A calibration method implemented by a calibration system comprising a robot arm including, at a tip, a holding portion configured to hold an object to be held, an image capturing apparatus configured to generate at least one captured image by capturing an image of the robot arm from a predetermined direction, and a calibration apparatus, the method comprising:

generating first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space; and

coordinate-converting the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm.

**8.** An information processing method implemented by an information processing system comprising a robot arm including, at a tip, a holding portion configured to hold an object to be held, an image capturing apparatus configured to generate at least one captured image by capturing an image of the robot arm from a predetermined direction, and a calibration apparatus, the method comprising:

generating first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space;

generating second coordinate information at a predetermined timing related to the image capturing based on a joint angle of the robot arm; and

generating coordinate conversion information for coordinate-converting the first coordinate information into the second coordinate information based on one or more pieces of the first coordinate information and the second coordinate information generated based on a same number of joint angles of the robot arm as a number of pieces of the first coordinate information.

**9.** A robot control method implemented by a robot control system comprising a robot arm including, at a tip, a holding portion configured to hold an object to be held, an image capturing apparatus configured to generate at least one captured image by capturing an image of the robot arm from a predetermined direction, and a calibration apparatus, the method comprising:

a first coordinate generation unit configured to generate first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space;

a conversion unit configured to coordinate-convert the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm; and

a robot control unit configured to drive the robot arm by a predetermined amount in accordance with the image capturing from the predetermined direction.

**10.** A calibration program implemented by a calibration apparatus connected to a robot arm including, at a tip, a holding portion configured to hold an object to be held and an image capturing apparatus configured to generate at least one captured image by capturing an image of the robot arm from a predetermined direction, the program comprising:

generating first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space; and

coordinate-converting the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm.

**11.** An information processing program implemented by an information processing apparatus connected to a robot arm including, at a tip, a holding portion configured to hold an object to be held and an image capturing apparatus configured to generate at least one captured image by capturing an image of the robot arm from a predetermined direction, the program comprising:

generating first coordinate information based on a learning model generated by performing machine learning on plural pieces of supervised data and a captured image obtained by image capturing the robot arm from a predetermined direction, the first coordinate information indicating a position of the holding portion in a captured image coordinate system with respect to the captured image, the supervised data including a captured image of a virtual space containing a three-dimensional model related to the robot arm and information indicating a position of the holding portion of the robot arm contained in the virtual space;

generating second coordinate information at a predetermined timing related to the image capturing based on a joint angle of the robot arm; and

generating coordinate conversion information for coordinate-converting the first coordinate information into the second coordinate information based on one or more pieces of the first coordinate information and the second coordinate information generated based on a same number of joint angles of the robot arm as a number of pieces of the first coordinate information.

12. A calibration apparatus, comprising:

a first coordinate generation unit configured to generate first coordinate information based on a learning model generated by performing machine learning on plural pieces of supervised data and a captured image obtained by image capturing of a robot arm from a predetermined direction, the robot arm including, at a tip, a holding portion configured to hold an object to be held, the supervised data including a captured image of a virtual space containing a three-dimensional model related to the robot arm and information indicating a position of the holding portion of the robot arm contained in the virtual space, the first coordinate information indicating a position of the holding portion in a captured image coordinate system with respect to the captured image; and

a second coordinate generation unit configured to coordinate-convert the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm.

13. An information processing apparatus, comprising:

a first coordinate generation unit configured to generate first coordinate information based on a learning model generated by performing machine learning on plural pieces of supervised data and a captured image obtained by image capturing of a robot arm from a predetermined direction, the robot arm including, at a tip, a holding portion configured to hold an object to be held, the supervised data including a captured image of a virtual space containing a three-dimensional model related to the robot arm and information indicating a position of the holding portion of the robot arm contained in the virtual space, the first coordinate information indicating a position of the holding portion in a captured image coordinate system with respect to the captured image;

a second coordinate generation unit configured to generate second coordinate information at a predetermined timing related to the image capturing based on a joint angle of the robot arm; and

a coordinate conversion information generation unit configured to generate coordinate conversion information for coordinate-converting the first coordinate information into the second coordinate information based on one or more pieces of the first coordinate information and the second coordinate information generated based on a same number of joint angles of the robot arm as a number of pieces of the first coordinate information.

14. A robot control apparatus, comprising:

a first coordinate generation unit configured to generate first coordinate information based on a learning model generated by performing machine learning on plural pieces of supervised data and a captured image obtained by image capturing of a robot arm from a predetermined direction, the robot arm including, at a tip, a holding portion configured to hold an object to be held, the supervised data including a captured image of a virtual space containing a three-dimensional model related to the robot arm and information indicating a position of the holding portion of the robot arm contained in the virtual space, the first coordinate information indicating a position of the holding portion in a captured image coordinate system with respect to the captured image;

a conversion unit configured to coordinate-convert the first coordinate information into second coordinate information based on coordinate conversion information and the first coordinate information, the coordinate conversion information being used for coordinate conversion processing of coordinate-converting the first coordinate information into the second coordinate information, the second coordinate information indicating a position of the holding portion in a robot coordinate system with respect to the robot arm; and

a robot control unit configured to drive the robot arm by a predetermined amount in accordance with the image capturing from the predetermined direction.

FIG. 1

FIG. 2

NW

1

**CALIBRATION APPARATUS** 10

**IMAGE CAPTURING APPARATUS** 20

**HOLDING PORTION** 31 **ROBOT ARM** 30

**COMMUNICATION UNIT** 11

**INPUT UNIT** 12

**DISPLAY UNIT** 13

**STORAGE UNIT** 14

**LEARNING MODEL** 141

**NEURAL NETWORK STRUCTURE** 141a

**LEARNING PARAMETER** 141b

**COORDINATE CONVERSION INFORMATION** 142

**PROCESSING UNIT** 15

**SPACE GENERATION UNIT** 151

**LEARNING UNIT** 152

**ROBOT CONTROL UNIT** 153

**FIRST COORDINATE GENERATION UNIT** 154

**SECOND COORDINATE GENERATION UNIT** 155

**CONVERSION INFORMATION GENERATION UNIT** 156

**CONVERSION UNIT** 157

# FIG. 3

31b

31a

33b

33a

## FIG. 4

## FIG. 5

START

ACQUIRE THREE-DIMENSIONAL DATA OF HOLDING PORTION ⟜S101

SET CONDITIONS FOR ARRANGING HOLDING PORTION ON VIRTUAL SPACE ⟜S102

ARRANGE HOLDING PORTION ON VIRTUAL SPACE ⟜S103

ACQUIRE CAPTURED IMAGE, POSITION, AND ORIENTATION OF HOLDING PORTION ⟜S104

STORE ACQUIRED IMAGE, POSITION, AND ORIENTATION ⟜S105

PREDETERMINED NUMBER OF TIMES REACHED? ⟜S106

No

Yes

LEARNING PROCESSING ⟜S107

END

FIG. 6

START

MOVE HOLDING PORTION S201

CAPTURE WORK AREA S202

GENERATE FIRST COORDINATE INFORMATION S203

GENERATE SECOND COORDINATE INFORMATION S204

No ← PREDETERMINED NUMBER OF TIMES REACHED? S210

Yes

GENERATE COORDINATE CONVERSION INFORMATION S220

END

# FIG. 7

NW

1a

CALIBRATION APPARATUS — 10a

IMAGE CAPTURING APPARATUS — 20

HOLDING PORTION — 31 | ROBOT ARM — 30

COMMUNICATION UNIT — 11

INPUT UNIT — 12

DISPLAY UNIT — 13

STORAGE UNIT — 14

LEARNING MODEL — 141

NEURAL NETWORK STRUCTURE — 141a

LEARNING PARAMETER — 141b

COORDINATE CONVERSION INFORMATION — 142

PROCESSING UNIT — 15a

SPACE GENERATION UNIT — 151

LEARNING UNIT — 152

ROBOT CONTROL UNIT — 153

FIRST COORDINATE GENERATION UNIT — 154

SECOND COORDINATE GENERATION UNIT — 155

CONVERSION INFORMATION GENERATION UNIT — 156a

CONVERSION UNIT — 157

ERROR ADDITION UNIT — 158a

FIG. 8

24

FIG. 9

<div align="center">

**INTERNATIONAL SEARCH REPORT**

</div>

| International application No. |
| --- |
| PCT/JP2021/012177 |

A. CLASSIFICATION OF SUBJECT MATTER
Int.Cl. B25J13/08(2006.01)i, B25J19/04(2006.01)i
FI: B25J13/08A, B25J19/04
According to International Patent Classification (IPC) or to both national classification and IPC

B. FIELDS SEARCHED

Minimum documentation searched (classification system followed by classification symbols)
Int.Cl. B25J13/08, B25J19/04

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 6671694 B1 (CROSS COMPASS LTD.) 25 March 2020 (2020-03-25), entire text, all drawings | 1-14 |
| A | JP 2017-102755 A (IKEGAMI TSUSHINKI CO., LTD.) 08 June 2017 (2017-06-08), entire text, all drawings | 1-14 |
| A | JP 2019-150911 A (HITACHI, LTD.) 12 September 2019 (2019-09-12), entire text, all drawings | 1-14 |
| A | JP 2014-199584 A (CANON INC.) 23 October 2014 (2014-10-23), entire text, all drawings | 1-14 |
| A | JP 2012-218119 A (CANON INC.) 12 November 2012 (2012-11-12), entire text, all drawings | 1-14 |
| A | JP 2015-024480 A (FUJITSU LIMITED) 05 February 2015 (2015-02-05), entire text, all drawings | 1-14 |
| A | JP 06-203166 A (FUJITSU LIMITED) 22 July 1994 (1994-07-22), entire text, all drawings | 1-14 |

☒ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 02 June 2021 | 15 June 2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/012177

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-001393 A (CANON INC.) 11 January 2018 (2018-01-11), entire text, all drawings | 1-14 |
| A | JP 2015-100868 A (SEIKO EPSON CORPORATION) 04 June 2015 (2015-06-04), entire text, all drawings | 1-14 |

Form PCT/ISA/210 (second sheet) (January 2015)

**INTERNATIONAL SEARCH REPORT**
Information on patent family members

International application No.

PCT/JP2021/012177

| | | |
|---|---|---|
| JP 6671694 B1 | 25 March 2020 | JP 2020-82322 A |
| JP 2017-102755 A | 08 June 2017 | (Family: none) |
| JP 2019-150911 A | 12 September 2019 | US 2019/0270200 A1<br>entire text, all drawings<br>EP 3534230 A2<br>CN 110216649 A |
| JP 2014-199584 A | 23 October 2014 | US 2014/0294292 A1<br>entire text, all drawings |
| JP 2012-218119 A | 12 November 2012 | US 2012/0259462 A1<br>entire text, all drawings |
| JP 2015-024480 A | 05 February 2015 | (Family: none) |
| JP 06-203166 A | 22 July 1994 | (Family: none) |
| JP 2018-001393 A | 11 January 2018 | (Family: none) |
| JP 2015-100868 A | 04 June 2015 | (Family: none) |

Form PCT/ISA/210 (patent family annex) (January 2015)

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018144152 A
- JP 2019171540 A